# EUROPEAN PATENT APPLICATION

(11) **EP 4 040 764 A2**
(43) Date of publication of application: **10.08.2022**
(21) Application number: 22175986.3
(22) Date of filing: 30.05.2022
(51) Int. Cl.: H04M 1/60

(54) **METHOD AND APPARATUS FOR IN-VEHICLE CALL, DEVICE, COMPUTER READABLE MEDIUM AND PRODUCT**

(30) Priority: 08.06.2021 CN 202110636748
(71) Applicant: Apollo Intelligent Connectivity (Beijing) Technology Co., Ltd., Beijing 100176 (CN)
(72) Inventor: ZHOU, Yi, BEIJING, 100176 (CN); CHEN, Zhen, BEIJING, 100176 (CN)
(74) Representative: Santarelli

(57) **Abstract**

The present disclosure discloses a method and apparatus for an in-vehicle call, a device, a medium and a product, and relates to the field of computer, and further to the field of vehicle networking technology. A specific implementation comprises: acquiring audio data of each location area in a target vehicle; determining, based on an audio parameter of respective audio data, target audio data from the respective audio data; determining a target location area corresponding to the target audio data; and configuring an in-vehicle call parameter of the target vehicle based on the target location area, to perform an in-vehicle call through audio data of the target location area. According to this implementation, the flexibility of the in-vehicle call may be improved.

## Description

### TECHNICAL FIELD

The present disclosure relates to the field of computer, further to the field of vehicle networking technology, and particularly to a method and apparatus for an in-vehicle call, a device, a medium and a product.

### BACKGROUND

At present, intelligent vehicles often adopt a multi-audio-zone technology to precisely distinguish the voice commands issued by passengers in different locations. For example, when the driver in a main driving seat speaks, the voice produced by users in other seats is suppressed, and only the voice of the driver in the main driving seat is received.

In practice, it has been found that when an in-vehicle call is performed in the intelligent vehicles adopting the multi-audio-zone technology, a call system can only be allocated to a single seat to achieve a voice pickup of a single location, which cannot satisfy a use requirement that a call location is dynamically switched according to an interaction willingness of a user. It can be seen that the current in-vehicle call method has a problem of poor call flexibility.

### SUMMARY

The present disclosure provides a method and apparatus for an in-vehicle call, a device, a medium and a product.

In a first aspect, embodiments of the present disclosure provide a method for an in-vehicle call, comprising: acquiring audio data of each location area in a target vehicle; determining, based on an audio parameter of respective audio data, target audio data from the respective audio data; determining a target location area corresponding to the target audio data; and configuring an in-vehicle call parameter of the target vehicle based on the target location area, to perform an in-vehicle call through audio data of the target location area.

In a second aspect, embodiments of the present disclosure provide an apparatus for an in-vehicle call, comprising: an audio acquiring unit, configured to acquire audio data of each location area in a target vehicle; an audio determining unit, configured to determine, based on an audio parameter of respective audio data, target audio data from the respective audio data; an area determining unit, configured to determine a target location area corresponding to the target audio data; and a configuring unit, configured to configure an in-vehicle call parameter of the target vehicle based on the target location area, to perform an in-vehicle call through audio data of the target location area.

In a third aspect, embodiments of the present disclosure provide an electronic device, comprising: one or more processors; and a memory, storing one or more programs, wherein the one or more programs, when executed by the one or more processors, cause the one or more processors to implement the method for an in-vehicle call provided by the first aspect.

In a forth aspect, embodiments of the present disclosure provide a computerreadable medium, storing a computer program thereon, wherein the program, when executed by a processor, causes the processor to implement the method for an in-vehicle call provided by the first aspect.

In a fifth aspect, an embodiment of the present disclosure provides a computer program product, comprising a computer program, wherein the computer program, when executed by a processor, implements the method for an in-vehicle call provided by the first aspect.

According to the technology of the present disclosure, a method for an in-vehicle call is provided, and the method can be applied to an intelligent vehicle adopting a multi-audio-zone technology. The target audio data having a call intent most is determined based on the audio parameter of the audio data of the each location area in the vehicle, and the in-vehicle call parameter is configured based on the target location area corresponding to the target audio data, thus implementing the audio data of the target location area as a call party of the in-vehicle call. According to this process, the location area for the in-vehicle call can be flexibly determined based on the audio parameter, and the in-vehicle call parameter can be correspondingly configured, thereby implementing that the call location is dynamically switched according to an interaction willingness of a user, and improving the flexibility of the in-vehicle call.

It should be understood that the content described in this part is not intended to identify key or important features of the embodiments of the present disclosure, and is not used to limit the scope of the present disclosure. Other features of the present disclosure will be easily understood through the following description.

### BRIEF DESCRIPTION OF THE DRAWINGS

The accompanying drawings are used for a better understanding of the scheme, and do not constitute a limitation to the present disclosure. Here:
Fig. 1 is a diagram of an exemplary system architecture in which an embodiment of the present disclosure may be applied;
Fig. 2 is a flowchart of an embodiment of a method for an in-vehicle call according to the present disclosure;
Fig. 3 is a schematic diagram of an application scenario of the method for an in-vehicle call according to the present disclosure;
Fig. 4 is a flowchart of another embodiment of the method for an in-vehicle call according to the present disclosure;
Fig. 5 is a schematic structural diagram of an embodiment of an apparatus for an in-vehicle call according to the present disclosure; and
Fig. 6 is a block diagram of an electronic device used to implement the method for an in-vehicle call in the embodiments of the present disclosure.

### DETAILED DESCRIPTION OF EMBODIMENTS

Exemplary embodiments of the present disclosure are described below in combination with the accompanying drawings, and various details of the embodiments of the present disclosure are included in the description to facilitate understanding, and should be considered as exemplary only. Accordingly, it should be recognized by one of ordinary skill in the art that various changes and modifications may be made to the embodiments described herein without departing from the scope and spirit of the present disclosure. Also, for clarity and conciseness, descriptions for well-known functions and structures are omitted in the following description.

It should be noted that the embodiments in the present disclosure and the features in the embodiments may be combined with each other on a non-conflict basis. The present disclosure will be described below in detail with reference to the accompanying drawings and in combination with the embodiments.

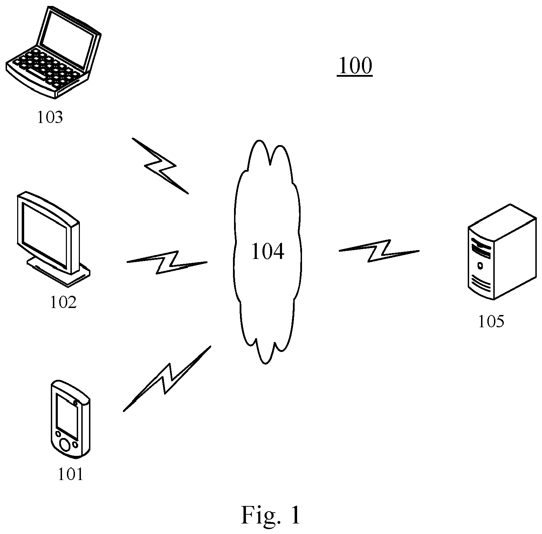

As shown in Fig. 1, a system architecture 100 may include terminal devices 101, 102 and 103, a network 104 and a server 105. The network 104 serves as a medium providing a communication link between the terminal devices 101, 102 and 103 and the server 105. The network 104 may include various types of connections, for example, wired or wireless communication links, or optical fiber cables.

A user may use the terminal devices 101, 102 and 103 to interact with the server 105 via the network 104, to receive or send a message, etc. The terminal devices 101, 102 and 103 may be vehicle-mounted terminals in a target vehicle, and specifically may include, but not limited to, electronic devices such as a mobile phone, a computer and a tablet. The terminal devices 101, 102 and 103 may interact with a microphone device of the target vehicle, to acquire audio data collected by the microphone device. Here, the target vehicle may be a vehicle adopting a multi-audio-zone technology. The target vehicle includes a plurality of location areas, and each location area corresponds to a respective microphone device. Based on the audio data collected by the microphone device of the each location area, the audio data of the location areas may be obtained.

The terminal devices 101, 102 and 103 may be hardware or software. When being the hardware, the terminal devices 101, 102 and 103 may be various electronic devices, the electronic devices including, but not limited to, a television, a smartphone, a tablet computer, an e-book reader, a vehicle-mounted computer, a laptop portable computer, a desktop computer, and the like. When being the software, the terminal devices 101, 102 and 103 may be installed in the above listed electronic devices. The terminal devices 101, 102 and 103 may be implemented as a plurality of pieces of software or a plurality of software modules (e.g., software or software modules for providing a distributed service), or may be implemented as a single piece of software or a single software module, which will not be specifically limited here.

The server 105 may be a server providing various services. For example, after the terminal devices 101, 102 and 103 acquire the audio data of the location areas in the target vehicle, the server 105 may determine, based on an audio parameter of respective audio data, target audio data from the respective audio data, and configure an in-vehicle call parameter of the target vehicle based on a target location area corresponding to the target audio data, to perform an in-vehicle call through audio data of the target location area. After the server 105 configures the in-vehicle call parameter, the terminal devices 101, 102 and 103 may receive the target audio data transmitted by the microphone device corresponding to the target location area, and transmit the target audio data to the server 105, such that the server 105 transmits the target audio data to an other terminal device performing the in-vehicle call.

It should be noted that the server 105 may be hardware or software. When being the hardware, the server 105 may be implemented as a distributed server cluster composed of a plurality of servers, or may be implemented as a single server. When being the software, the server 105 may be implemented as a plurality of pieces of software or a plurality of software modules (e.g., software or software modules for providing a distributed service), or may be implemented as a single piece of software or a single software module, which will not be specifically limited here.

It should be noted that a method for an in-vehicle call provided in the embodiments of the present disclosure may be performed by the terminal devices 101, 102 and 103, or by the server 105. Correspondingly, an apparatus for an in-vehicle call may be provided in the terminal devices 101, 102 and 103, or in the server 105.

It should be appreciated that the numbers of the terminal devices, the networks and the servers in Fig. 1 are merely illustrative. Any number of terminal devices, networks and servers may be provided based on actual requirements.

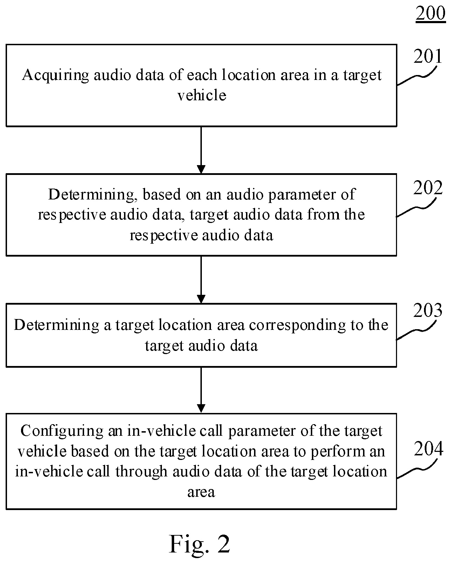

Further referring to Fig. 2, Fig. 2 illustrates a flow 200 of an embodiment of a method for an in-vehicle call according to the present disclosure. Here, the method for an in-vehicle call in this embodiment includes the following steps:
Step 201, acquiring audio data of each location area in a target vehicle.

In this embodiment, an executing body (e.g., the server 105 or the terminal devices 101, 102 and 103 in Fig. 1) may divide a target vehicle into a plurality of location areas, and each location area is independent, and not disturbed by the sound of an other location area. Accordingly, a precise distinction for voice commands of different location areas is realized. Here, the executing body may divide a location area according to the seat of the target vehicle. For example, each seat corresponds to one location area. If the target vehicle is a five-seater vehicle, there are five corresponding location areas. Alternatively, the executing body may acquire current image information of the target vehicle, obtain current passenger location information of the target vehicle based on an image recognition performed on the current image information, and determine the each location area based on the current passenger location information, such that the each location area corresponds to the location of one passenger. Alternatively, the executing body may acquire sound information collected by each microphone in the target vehicle, determine the current passenger location information of the target vehicle based on a sound source localization technology, and determine the each location area based on the current passenger location information.

Further, the executing body may establish a connection with a microphone device in the target vehicle, and receive the audio data of the each location area in the target vehicle, the audio data being transmitted by the microphone device. A number of microphone devices is typically more than one, and the microphone devices corresponds to different location areas. For example, each microphone device corresponds to one location area, and is responsible for collecting an audio of the location area. At this time, the executing body may collect audio data based on the microphone device of the each location area. Alternatively, the executing body may directly collect the sound information in the target vehicle, and obtain the audio data corresponding to the each location area based on an analysis performed on the sound information.

Step 202, determining, based on an audio parameter of respective audio data, target audio data from the respective audio data.

In this embodiment, the audio parameter is a parameter used to describe an audio state of audio data, and may include, but not limited to, an audio decibel, audio energy, an audio amplitude, an audio channel, and the like, which is not limited in this embodiment. The executing body may screen the target audio data used for an in-vehicle call from the respective audio data, based on the audio parameter of the respective audio data. Specifically, based on a pre-trained audio processing model, the executing body may input the audio parameter of the respective audio data into the audio processing model to obtain the target audio data. Here, the audio processing model may be trained and obtained based on the following steps: acquiring a training audio sample set and annotation information corresponding to each training audio sample in the training audio sample set, the annotation information including a call audio or a non-call audio; obtaining a predicted annotation corresponding to the each training audio sample based on the training audio sample set and a to-be-trained neural network model; and adjusting, based on the predicted annotation and preset annotation information, a model parameter of the to-be-trained neural network model until a preset training convergence condition is satisfied and a trained neural network model is obtained.

In some alternative implementations of this embodiment, the determining, based on an audio parameter of respective audio data, target audio data from the respective audio data includes: acquiring semantic information of the respective audio data; and determining the target audio data from the respective audio data based on the audio parameter and the semantic information of the respective audio data.

In this embodiment, the executing body may further acquire the semantic information of the respective audio data, and specifically may determine the semantic information corresponding to the respective audio data through a speech recognition technology. Here, the semantic information is used to describe semantic content corresponding to the audio data. When the target audio data is determined, the target audio data may be determined based on both the audio parameter and the semantic information. For example, in the situation where passengers in the location areas are talking, it is required to recognize a passenger in a location area who needs to perform an in-vehicle call, recognize passengers in location areas who conduct a conversation with each other, and recognize a passenger conducting a conversation in various other nonvehicle call scenarios. The executing body may first determine and obtain at least one piece of to-be-selected audio data based on the audio parameter of the respective audio data, and then determine the target audio data from the at least one piece of to-be-selected audio data based on the semantic information. Alternatively, a keyword for an in-vehicle call may be preset. If the keyword is detected in the semantic information, the audio data corresponding to the semantic information is determined as the target audio data.

Step 203, determining a target location area corresponding to the target audio data.

In this embodiment, there is a corresponding relationship between each piece of audio data and a location area. After determining and obtaining the target audio data, the executing body may further determine the target location area corresponding to the target audio data. Here, the corresponding relationship between the each piece of audio data and the location area may be determined based on a corresponding relationship between a microphone device collecting the audio data and the location area, or determined based on a corresponding relationship between sound localization information of the audio data and the location area, which is not limited in this embodiment.

Step 204, configuring an in-vehicle call parameter of the target vehicle based on the target location area to perform an in-vehicle call through audio data of the target location area.

In this embodiment, the in-vehicle call parameter is used to configure audio reception data of the in-vehicle call. The configuring an in-vehicle call parameter of the target vehicle based on the target location area may include: configuring an audio channel for the in-vehicle call in the target vehicle as an audio channel corresponding to the target location area; or receiving all audio data in the target vehicle, performing noise reduction processing on audio data except the audio data corresponding to the target location area, and sending, based on the audio data after the noise reduction processing, voice to an electronic device performing an in-vehicle call with the target vehicle. Here, the in-vehicle call may be an in-vehicle voice call or an in-vehicle video call, which is not limited in this embodiment.

Alternatively, the configuring an in-vehicle call parameter of the target vehicle based on the target location area to perform an in-vehicle call through audio data of the target location area may include: establishing a connection with a microphone device and a camera device in the target vehicle; controlling the microphone device to collect voice produced by a target user corresponding to the target location area, and controlling the camera device to collect an image corresponding to the target user corresponding to the target location area; performing a synthesis based on the voice and the image to obtain a real-time transmitted information stream; and transmitting the real-time transmitted information stream to the electronic device performing the in-vehicle call. Further alternatively, in response to receiving call data returned by the electronic device, image call data and voice call data corresponding to the call data are determined. Moreover, a display device corresponding to the target location area is controlled to output the image call data thereon, and an audio device corresponding to the target location area is controlled to output the voice call data.

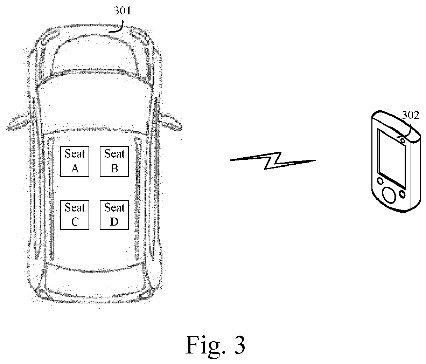

Further referring to Fig. 3, Fig. 3 is a schematic diagram of an application scenario of the method for an in-vehicle call according to the present disclosure. In the application scenario of Fig. 3, a target vehicle 301 includes a seat A, a seat B, a seat C and a seat D. The seat A corresponds to a first location area, the seat B corresponds to a second location area, the seat C corresponds to a third location area, and the seat D corresponds to a fourth location area. The executing body may respectively acquire first audio data of the first location area, second audio data of the second location area, third audio data of the third location area, and fourth audio data of the fourth location area. Then, based on an audio parameter of respective audio data, target audio data is determined from the respective audio data. Assuming that the target audio data is the first audio data, the first location area is determined as a target location area. An in-vehicle call parameter of the target vehicle 301 is configured based on the first location area, so as to perform an in-vehicle call through the first audio data. That is, the first audio data is transmitted to a terminal device 302 that is performing an in-vehicle call with the target vehicle 301.

The method for an in-vehicle call provided in the above embodiment of the present disclosure can be applied to an intelligent vehicle adopting a multi-audio-zone technology. The target audio data having a call intent most is determined based on the audio parameter of the audio data of the each location area in the vehicle, and the in-vehicle call parameter is configured based on the target location area corresponding to the target audio data, thus implementing the audio data of the target location area as a call party of the in-vehicle call. According to this process, the location area for the in-vehicle call can be flexibly determined based on the audio parameter, and the in-vehicle call parameter can be correspondingly configured, thereby implementing that the call location is dynamically switched according to an interaction willingness of a user, and improving the flexibility of the in-vehicle call.

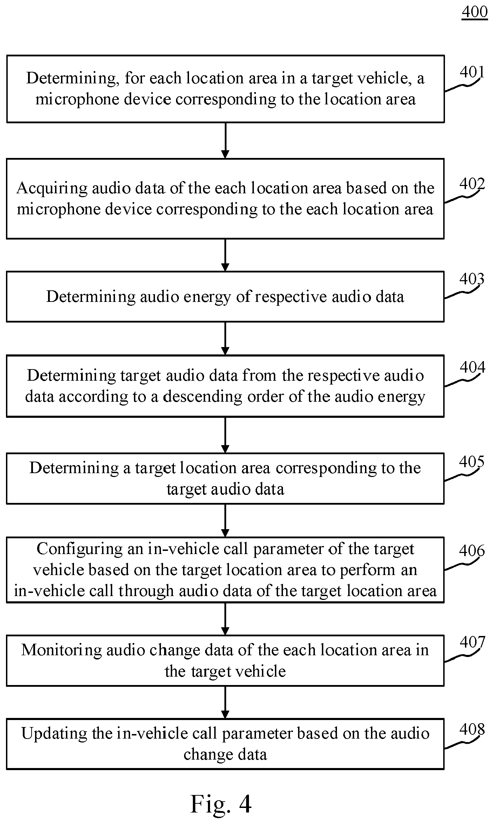

Further referring to Fig. 4, Fig. 4 illustrates a flow 400 of another embodiment of the method for an in-vehicle call according to the present disclosure. As shown in Fig. 4, the method for an in-vehicle call in this embodiment may include the following steps:
Step 401, determining, for each location area in a target vehicle, a microphone device corresponding to the location area.
   In this embodiment, the each location area in the target vehicle may correspond to at least one microphone device, and the at least one microphone device is used to collect audio data in the location area. The executing body may pre-store a corresponding relationship between each location area and each microphone device.
Step 402, acquiring audio data of the each location area based on the microphone device corresponding to the each location area.
   In this embodiment, the executing body may establish a connection with each microphone device and receive the audio data of the each location area that is transmitted by the each microphone device. Alternatively, when the audio data of the each location area is acquired, the initially collected audio data may be processed to filter a non-human sound part of the audio data, and the filtered audio data is used as the audio data of the each location area.
Step 403, determining audio energy of respective audio data.
   In this embodiment, an audio parameter includes the audio energy. Here, for each piece of audio data, the executing body may determine a sound frequency, an amplitude and a wave speed in the audio data, and then calculate the audio energy corresponding to the each piece of audio data based on the sound frequency, the amplitude, the wave speed and a preset medium density. Alternatively, the executing body may invoke a preset audio energy determination interface, to obtain the audio energy of the respective audio data based on the audio energy determination interface.
Step 404, determining target audio data from the respective audio data according to a descending order of the audio energy.

In this embodiment, the executing body may select audio data having high audio energy as the target audio data, and preferably, the executing body selects the audio data having highest audio energy from the respective audio data as the target audio data.

In some alternative implementations of this embodiment, the determining target audio data from the respective audio data according to a descending order of the audio energy includes: acquiring a preset energy threshold; and selecting, according to the descending order of the audio energy, audio data having audio energy greater than the preset energy threshold from the respective audio data, to use the audio data as the target audio data.

In this implementation, the executing body may further preset an energy threshold. The energy threshold is used to determine whether the audio energy is too low, and used to select the audio data having the audio energy greater than the preset energy threshold as the target audio data. Specifically, the executing body may select, according to the descending order of the audio energy, the audio data having the audio energy greater than the preset energy threshold from the respective audio data, and preferably uses audio data that has audio energy greater than the preset energy threshold and of which the audio energy is the highest as the target audio data. Alternatively, in response to determining that at least two pieces of audio data of which the audio energy is greater than the preset energy threshold and is the same are present, the at least two pieces of audio data are used as candidate audio data. Then, semantic information of the candidate audio data is further acquired, and based on a semantic recognition and keyword matching that are performed on the semantic information, audio data having a highest degree of matching with a preset call keyword is determined from the candidate audio data to be used as the target audio data.

Step 405, determining a target location area corresponding to the target audio data.

In this embodiment, for the detailed description of step 405, reference is made to the detailed description of step 203, which will not be repeatedly described here.

Step 406, configuring an in-vehicle call parameter of the target vehicle based on the target location area to perform an in-vehicle call through audio data of the target location area.

In this embodiment, for the detailed description of step 406, reference is made to the detailed description of step 204, which will not be repeatedly described here.

Step 407, monitoring audio change data of the each location area in the target vehicle.

In this embodiment, the executing body may detect the audio change data in real time, or may periodically detect the audio change data according to a preset detection period, which is not limited in this embodiment. Here, the audio change data is used to describe a change of the audio data of the each location area, for example, a change of the audio energy, and specifically may include the changed audio energy of the respective audio data at the current moment.

Step 408, updating the in-vehicle call parameter based on the audio change data.

In this embodiment, the executing body updates the in-vehicle call parameter based on the audio change data, to perform the in-vehicle call through the audio data having maximum audio energy at the current moment. For example, a historical in-vehicle call parameter may be configured, such that the in-vehicle call is performed through the audio data of the target location area. When the audio change data is monitored this time, if it is detected that the audio energy of the audio data of the target location area is not the maximum audio energy, the current audio data with the maximum audio energy is configured as the audio data for the in-vehicle call, based on the audio change data.

According to the method for an in-vehicle call provided in the above embodiment of the present disclosure, the target audio data for the in-vehicle call may further be selected based on the order of the audio energy of the audio data, thereby implementing that the intent of a user to perform an in-vehicle call is determined based on the audio energy, such that the configuration for the in-vehicle call parameter is more in line with a call requirement. In addition, the audio energy of the selected target audio data may be greater than the preset energy threshold, which reduces the probability of occurrence of a situation where the call effect is poor due to the low audio energy, thereby further improving the call effect. Moreover, the in-vehicle call parameter can be updated according to the audio change data to realize a dynamic update of the call audio. Moreover, the target audio data may further be determined in combination with both the semantic information of the audio data and the audio parameter of the audio data, thereby improving the precision of the target audio data.

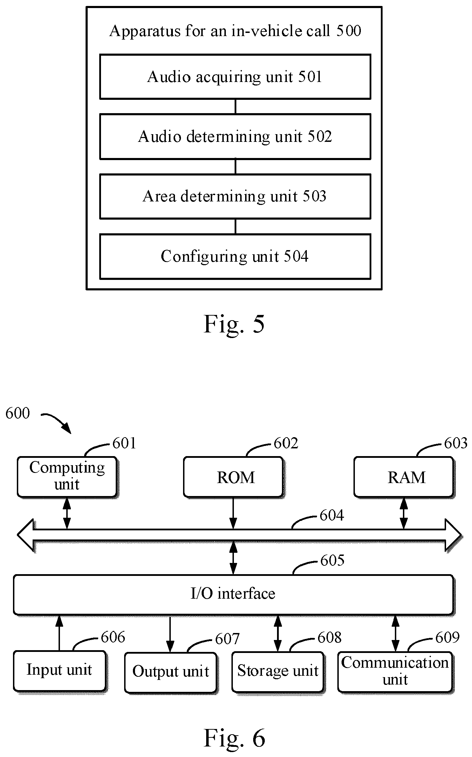

Further referring to Fig. 5, as an implementation of the method shown in the above drawings, the present disclosure provides an embodiment of an apparatus for an in-vehicle call. The embodiment of the apparatus corresponds to the embodiment of the method shown in Fig. 2, and the apparatus may be applied in various severs or terminal devices.

As shown in Fig. 5, the apparatus 500 for an in-vehicle call in this embodiment includes: an audio acquiring unit 501, an audio determining unit 502, an area determining unit 503 and a configuring unit 504.

The audio acquiring unit 501 is configured to acquire audio data of each location area in a target vehicle.

The audio determining unit 502 is configured to determine, based on an audio parameter of respective audio data, target audio data from the respective audio data.

The area determining unit 503 is configured to determine a target location area corresponding to the target audio data.

The configuring unit 504 is configured to configure an in-vehicle call parameter of the target vehicle based on the target location area, to perform an in-vehicle call through audio data of the target location area.

In some alternative implementations of this embodiment, the audio parameter includes audio energy. The audio determining unit 502 is further configured to: determine audio energy of the respective audio data; and determine the target audio data from the respective audio data according to a descending order of the audio energy.

In some alternative implementations of this embodiment, the audio determining unit 502 is further configured to: acquire a preset energy threshold; and select, according to the descending order of the audio energy, audio data having audio energy greater than the preset energy threshold from the respective audio data, to use the audio data as the target audio data.

In some alternative implementations of this embodiment, the audio acquiring unit 501 is further configured to: determine, for the each location area in the target vehicle, a microphone device corresponding to the location area; and acquire the audio data of the each location area based on the microphone device corresponding to the each location area.

In some alternative implementations of this embodiment, the configuring unit 504 is further configured to: monitor audio change data of the each location area in the target vehicle; and update the in-vehicle call parameter based on the audio change data.

In some alternative implementations of this embodiment, the audio determining unit 502 is further configured to: acquire semantic information of the respective audio data; and determine the target audio data from the respective audio data based on the audio parameter and the semantic information of the respective audio data.

It should be understood that the units 501-504 recorded in the apparatus 500 for an in-vehicle call respectively correspond to the steps in the method described with reference to Fig. 2. Therefore, the above operations and features described for the method for an in-vehicle call are also applicable to the apparatus 500 and the units contained therein, and thus will not be repeatedly described here.

According to an embodiment of the present disclosure, the present disclosure further provides an electronic device, a readable storage medium, and a computer program product.

Fig. 6 is a block diagram of an electronic device 600 used to implement the method for an in-vehicle call in the embodiments of the present disclosure. The electronic device is intended to represent various forms of digital computers such as a laptop computer, a desktop computer, a workstation, a personal digital assistant, a server, a blade server, a mainframe computer, and other appropriate computers. The electronic device may also represent various forms of mobile apparatuses such as personal digital processing, a cellular telephone, a smart phone, a wearable device and other similar computing apparatuses. The parts shown herein, their connections and relationships, and their functions are only as examples, and not intended to limit implementations of the present disclosure as described and/or claimed herein.

As shown in Fig. 6, the device 600 includes a computation unit 601, which may execute various appropriate actions and processes in accordance with a computer program stored in a read-only memory (ROM) 602 or a computer program loaded into a random access memory (RAM) 603 from a storage unit 608. The RAM 603 also stores various programs and data required by operations of the device 600. The computation unit 601, the ROM 602 and the RAM 603 are connected to each other through a bus 604. An input/output (I/O) interface 605 is also connected to the bus 604.

The following components in the device 600 are connected to the I/O interface 605: an input unit 606, for example, a keyboard and a mouse; an output unit 607, for example, various types of displays and a speaker; a storage device 608, for example, a magnetic disk and an optical disk; and a communication unit 609, for example, a network card, a modem, a wireless communication transceiver. The communication unit 609 allows the device 600 to exchange information/data with an other device through a computer network such as the Internet and/or various telecommunication networks.

The computation unit 601 may be various general-purpose and/or specialpurpose in-vehicle call having processing and computing capabilities. Some examples of the computation unit 601 include, but not limited to, a central processing unit (CPU), a graphics processing unit (GPU), various dedicated artificial intelligence (AI) computing chips, various processors that run a machine learning model algorithm, a digital signal processor (DSP), any appropriate processor, controller and microcontroller, etc. The computation unit 601 performs the various methods and processes described above, for example, the method for an in-vehicle call. For example, in some embodiments, the method for an in-vehicle call may be implemented as a computer software program, which is tangibly included in a machine readable medium, for example, the storage device 608. In some embodiments, part or all of the computer program may be loaded into and/or installed on the device 600 via the ROM 602 and/or the communication unit 609. When the computer program is loaded into the RAM 603 and executed by the computation unit 601, one or more steps of the above method for an in-vehicle call may be performed. Alternatively, in other embodiments, the computation unit 601 may be configured to perform the method for an in-vehicle call through any other appropriate approach (e.g., by means of firmware).

The various implementations of the systems and technologies described herein may be implemented in a digital electronic circuit system, an integrated circuit system, a field programmable gate array (FPGA), an application specific integrated circuit (ASIC), an application specific standard product (ASSP), a system-on-chip (SOC), a complex programmable logic device (CPLD), computer hardware, firmware, software and/or combinations thereof. The various implementations may include: being implemented in one or more computer programs, where the one or more computer programs may be executed and/or interpreted on a programmable system including at least one programmable processor, and the programmable processor may be a particular-purpose or general-purpose programmable processor, which may receive data and instructions from a storage system, at least one input device and at least one output device, and send the data and instructions to the storage system, the at least one input device and the at least one output device.

Program codes used to implement the method of embodiments of the present disclosure may be written in any combination of one or more programming languages. These program codes may be provided to a processor or controller of a general-purpose computer, particular-purpose computer or other programmable data processing apparatus, so that the program codes, when executed by the processor or the controller, cause the functions or operations specified in the flowcharts and/or block diagrams to be implemented. These program codes may be executed entirely on a machine, partly on the machine, partly on the machine as a stand-alone software package and partly on a remote machine, or entirely on the remote machine or a server.

In the context of the present disclosure, the machine-readable medium may be a tangible medium that may include or store a program for use by or in connection with an instruction execution system, apparatus or device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any appropriate combination thereof. A more particular example of the machine-readable storage medium may include an electronic connection based on one or more lines, a portable computer disk, a hard disk, a random-access memory (RAM), a read-only memory (ROM), an erasable programmable read-only memory (EPROM or flash memory), an optical fiber, a portable compact disk read-only memory (CD-ROM), an optical storage device, a magnetic storage device, or any appropriate combination thereof.

To provide interaction with a user, the systems and technologies described herein may be implemented on a computer having: a display device (such as a CRT (cathode ray tube) or LCD (liquid crystal display) monitor) for displaying information to the user; and a keyboard and a pointing device (such as a mouse or a trackball) through which the user may provide input to the computer. Other types of devices may also be used to provide interaction with the user. For example, the feedback provided to the user may be any form of sensory feedback (such as visual feedback, auditory feedback or tactile feedback); and input from the user may be received in any form, including acoustic input, speech input or tactile input.

The systems and technologies described herein may be implemented in: a computing system including a background component (such as a data server), or a computing system including a middleware component (such as an application server), or a computing system including a front-end component (such as a user computer having a graphical user interface or a web browser through which the user may interact with the implementations of the systems and technologies described herein), or a computing system including any combination of such background component, middleware component or front-end component. The components of the systems may be interconnected by any form or medium of digital data communication (such as a communication network). Examples of the communication network include a local area network (LAN), a wide area network (WAN), and the Internet.

A computer system may include a client and a server. The client and the server are generally remote from each other, and generally interact with each other through the communication network. A relationship between the client and the server is generated by computer programs running on a corresponding computer and having a client-server relationship with each other.

It should be appreciated that the steps of reordering, adding or deleting may be executed using the various forms shown above. For example, the steps described in embodiments of the present disclosure may be executed in parallel or sequentially or in a different order, so long as the expected results of the technical schemas provided in embodiments of the present disclosure may be realized, and no limitation is imposed herein.

The above particular implementations are not intended to limit the scope of the present disclosure. It should be appreciated by those skilled in the art that various modifications, combinations, sub-combinations, and substitutions may be made depending on design requirements and other factors. Any modification, equivalent and modification that fall within the spirit and principles of the present disclosure are intended to be included within the scope of the present disclosure.

## Claims

1. A method for an in-vehicle call, comprising:
acquiring (201) audio data of each location area in a target vehicle;
determining (202), based on an audio parameter of respective audio data, target audio data from the respective audio data;
determining (203, 405) a target location area corresponding to the target audio data; and
configuring (204) an in-vehicle call parameter of the target vehicle based on the target location area, to perform an in-vehicle call through audio data of the target location area.

2. The method according to claim 1, wherein the audio parameter comprises audio energy, and
the determining (202), based on an audio parameter of respective audio data, target audio data from the respective audio data comprises:
determining (403) audio energy of the respective audio data; and
determining (404)the target audio data from the respective audio data according to a descending order of the audio energy.

3. The method according to claim 2, wherein the determining (404) the target audio data from the respective audio data according to a descending order of the audio energy comprises:
acquiring a preset energy threshold; and
selecting, according to the descending order of the audio energy, audio data having audio energy greater than the preset energy threshold from the respective audio data, to use the audio data as the target audio data.

4. The method according to any one of claims 1-3, wherein the acquiring (201) audio data of each location area in a target vehicle comprises:
Determining (401), for the each location area in the target vehicle, a microphone device corresponding to the location area; and
acquiring (402) the audio data of the each location area based on the microphone device corresponding to the each location area.

5. The method according to any one of claims 1-4, further comprising:
monitoring (407) audio change data of the each location area in the target vehicle; and
updating (408) the in-vehicle call parameter based on the audio change data.

6. The method according to any one of claims 1-4, wherein the determining (202), based on an audio parameter of respective audio data, target audio data from the respective audio data comprises:
acquiring semantic information of the respective audio data; and
determining the target audio data from the respective audio data based on the audio parameter and the semantic information of the respective audio data.

7. An apparatus for an in-vehicle call, comprising:
an audio acquiring unit (501), configured to acquire audio data of each location area in a target vehicle;
an audio determining unit (502), configured to determine, based on an audio parameter of respective audio data, target audio data from the respective audio data;
an area determining unit (503), configured to determine a target location area corresponding to the target audio data; and
a configuring unit (504), configured to configure an in-vehicle call parameter of the target vehicle based on the target location area, to perform an in-vehicle call through audio data of the target location area.

8. The apparatus according to claim 7, wherein the audio parameter comprises audio energy, and
the audio determining unit (502) is further configured to:
determine audio energy of the respective audio data; and
determine the target audio data from the respective audio data according to a descending order of the audio energy.

9. The apparatus according to claim 8, wherein the audio determining unit (502) is further configured to:
acquire a preset energy threshold; and
select, according to the descending order of the audio energy, audio data having audio energy greater than the preset energy threshold from the respective audio data, to use the audio data as the target audio data.

10. The apparatus according to any one of claims 7-9, wherein the audio acquiring unit (501) is further configured to:
determine, for the each location area in the target vehicle, a microphone device corresponding to the location area; and
acquire the audio data of the each location area based on the microphone device corresponding to the each location area.

11. The apparatus according to any one of claims 7-10, wherein the configuring unit (504) is further configured to:
monitor audio change data of the each location area in the target vehicle; and
update the in-vehicle call parameter based on the audio change data.

12. The apparatus according to any one of claims 7-11, wherein the audio determining unit (502) is further configured to:
acquire semantic information of the respective audio data; and
determine the target audio data from the respective audio data based on the audio parameter and the semantic information of the respective audio data.

13. An electronic device, performing a method for an in-vehicle call, the electronic device comprising:
at least one processor; and
a storage device, communicated with the at least one processor,
wherein the storage device stores an instruction executable by the at least one processor, and the instruction is executed by the at least one processor, to enable the at least one processor to perform the method according to any one of claims 1-6.

14. A non-transitory computer readable storage medium, storing a computer instruction, wherein the computer instruction is used to cause a computer to perform the method according to any one of claims 1-6.

15. A computer program product, comprising a computer program, wherein the computer program, when executed by a processor, implements the method according to any one of claims 1-6.
